# EUROPEAN PATENT SPECIFICATION

(11) **EP 4 442 796 B1**
(45) Date of publication and mention of the grant of the patent: **24.06.2026**
(21) Application number: 22901367.7
(22) Date of filing: 30.11.2022
(51) Int. Cl.: C09K 5/04, C10N 30/00, C10N 40/30, C10M 171/00, C10N 20/02, C10N 20/04, C10N 20/00, C10N 30/02

(54) **MIXED COMPOSITION FOR REFRIGERATORS**
MISCHZUSAMMENSETZUNG FÜR KÜHLSCHRANKE
COMPOSITION MIXTE POUR RÉFRIGÉRATEURS

(30) Priority: 01.12.2021 JP 2021195373
(43) Date of publication of application: 09.10.2024
(73) Proprietor: Idemitsu Kosan Co.,Ltd., Tokyo 100-8321 (JP)
(72) Inventor: NAKAJIMA, So, Tokyo 100-8321 (JP); KOJIMA, Akio, Tokyo 100-8321 (JP)
(74) Representative: Hoffmann Eitle
(86) International application number: PCT/JP2022/044197
(87) International publication number: WO 2023/100935

(56) References cited:
- WO-A1-2005/095557
- WO-A1-2007/026647
- WO-A1-2007/058082
- WO-A1-2009/072314
- WO-A1-2011/162391
- JP-A- H10 158 671
- US-A1- 2001 020 695
- US-A1- 2013 109 889
- ANONYMOUS: "Polyglykol M 2000", 30 October 2014 (2014-10-30), pages 1 - 4, XP093265654, Retrieved from the Internet <URL:https://web.archive.org/web/20151101150131/https://www.clariant.com/en/Solutions/Products/2014/01/16/15/31/Polyglykol-M-2000> [retrieved on 20250401]
- ANONYMOUS: "Functional Ingredients & Formulated Products for Cosmetics & Pharmaceuticals", 1 May 2019 (2019-05-01), pages 1 - 80, XP093265980, Retrieved from the Internet <URL:https://www.nof.co.jp/files/business/oleo/english/catalog.pdf> [retrieved on 20250402]

## Description

### Technical Field

The present invention relates to a mixed composition for a refrigerator.

In the description herein, the "mixed composition for a refrigerator" means a composition containing a "refrigerator oil composition" and a "refrigerant" mixed with each other.

### Background Art

A refrigerator, such as a compression refrigerator, generally includes at least a compressor, a condenser, an expansion mechanism (such as an expansion valve), and an evaporator, and has a structure in which a mixed composition for a refrigerator is circulated within the sealed system.

As a refrigerant used in a refrigerator, such as a compression refrigerator, a fluorinated hydrocarbon compound having a low environmental load is being used in place of a hydrochlorofluorocarbon (HCFC) having been widely used. Examples of the fluorinated hydrocarbon compound include a saturated fluorinated hydrocarbon compound (hydrofluorocarbon, which may be hereinafter referred to as "HFC"), such as 1,1,1,2-tetrafluoroethane (R134a), difluoromethane (R32), 1,1-difluoroethane (R152a), and a mixture of difluoromethane and pentafluoroethane (R410A).

The use of an unsaturated fluorinated hydrocarbon compound (hydrofluoroolefin, which may be hereinafter referred to as "HFO"), such as 1,3,3,3-tetrafluoropropene (R1234ze), 2,3,3,3-tetrafluoropropene (R1234yf), and 1,2,3,3-tetrafluoropropene (R1234ye), having a low global warming potential (GWP) is also being investigated.

In recent years, the use of a hydrocarbon based refrigerant, such as propane (R290), is also being investigated from the standpoint of further reducing the global warming potential (GWP) (see, for example, PTL 1).

### Citation List

### Patent Literature

PTL 1: JP 2004-043611 A
PTL 2: US 2013/109889 A

### Summary of Invention

### Technical Problem

When using a hydrocarbon based refrigerant, the viscosity of the mixed composition for a refrigerator, in which the refrigerant is dissolved in a refrigerator oil composition (which may be hereinafter referred to as a "dissolution viscosity"), tends to be low, as compared to an HFC refrigerant and an HFO refrigerant. The decrease of the dissolution viscosity becomes a factor of the progress of wear in a sliding part of the compressor and the like in the refrigerator. Therefore, the refrigerator oil composition that is used with a hydrocarbon based refrigerant is demanded to have an appropriate dissolution viscosity for exhibiting good lubricity in the case where a hydrocarbon based refrigerant is dissolved therein.

A hydrocarbon based refrigerant is highly flammable. Therefore, the used amount of a hydrocarbon based refrigerant is desirably reduced from the standpoint of facilitating the securement of the safety. Accordingly, the refrigerator oil composition that is used with a hydrocarbon based refrigerant is demanded to have a reduced dissolution amount of the hydrocarbon based refrigerant, so as to suppress the excessive dissolution of the hydrocarbon based refrigerant. From the standpoint of achieving the demand, the refrigerator oil composition that is used with a hydrocarbon based refrigerant is demanded to have a low solubility of a hydrocarbon based refrigerant.

However, the refrigerator oil composition of PTL 1 is insufficient in all the capabilities.

PTL 2 discloses a lubricant base oil for a refrigerant consisting of a C₁₋₈ hydrocarbon compound, wherein the lubricant base oil is a polyoxypropylene monohydrocarbyl ether having a number average molecular weight of from 500 to 3200, and the hydrocarbyl group has from 6 to 32 carbon atoms.

Under the circumstances, a problem to be solved by the present invention is to provide a mixed composition for a refrigerator comprising a refrigerator oil composition and a hydrocarbon based refrigerant, whereinthe refrigerator oil composition has an appropriate dissolution viscosity in the case where a hydrocarbon based refrigerant is dissolved therein. Solution to Problem

The present invention provides the following mixed composition for a refrigerator and method of producing a mixed composition for a refrigerator.

A mixed composition for a refrigerator comprising a refrigerator oil composition and a refrigerant containing a hydrocarbon based refrigerant,
the refrigerator oil composition containing one or more kind selected from a polyalkylene glycol based compound (A) having a number average molecular weight of 1,100 or more represented by the following general formula (1): 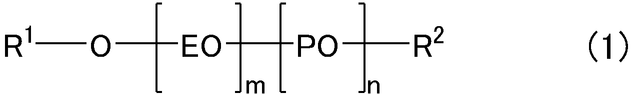
wherein in the general formula (1), one of R¹ and R² represents a hydrogen atom, and the other thereof represents a linear or branched alkyl group having 1 or more and 16 or less carbon atoms, E represents an ethylene group, P represents a propylene group, and m and n each represent a number of 0 or more, provided that m+n is 1 or more and 50 or less, and
wherein the polyalkylene glycol based compound (A) has a hydroxyl value of 10 mgKOH/g or more, as determined in accordance with JIS K0070:1992.

A method of producing a mixed composition for a refrigerator comprising a refrigerator oil composition and a refrigerant containing a hydrocarbon based refrigerant,
comprising a method of producing a refrigerator oil composition, including a step of mixing one or more kind selected from a polyalkylene glycol based compound (A) having a number average molecular weight of 1,100 or more represented by the following general formula (1): 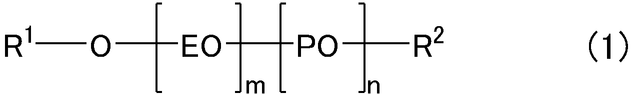
wherein in the general formula (1), one of R¹ and R² represents a hydrogen atom, and the other thereof represents a linear or branched alkyl group having 1 or more and 16 or less carbon atoms, E represents an ethylene group, P represents a propylene group, and m and n each represent a number of 0 or more, provided that m+n is 1 or more and 50 or less, and
wherein the polyalkylene glycol based compound (A) has a hydroxyl value of 10 mgKOH/g or more, as determined in accordance with JIS K0070:1992.

### Advantageous Effects of Invention

The present disclosure can provide a refrigerator oil composition that has an appropriate dissolution viscosity in the case where a hydrocarbon based refrigerant is dissolved therein, and has a low solubility of a hydrocarbon based refrigerant, and a mixed composition for a refrigerator containing the refrigerator oil composition.

### Brief Description of Drawings

Fig. 1 is a cross sectional view showing a viscosity measuring device used for measuring the dissolution viscosity in examples.
Fig. 2 is an enlarged cross sectional view showing an important part of the viscosity measuring device used for measuring the dissolution viscosity in the examples.
Fig. 3 is a cross sectional view showing a part of a measurement procedure with the viscosity measuring device used for measuring the dissolution viscosity in the examples.

### Description of Embodiments

In the description herein, the upper limit values and the lower limit values of the numerical ranges each can be optionally combined. For example, in the case where "A to B" and "C to D" are described as numerical ranges, the numerical ranges of "A to D" and "C to B" are also encompassed in the scope of the present invention.

In the description herein, the numerical range of "lower limit value to upper limit value" means the lower limit value or more and the upper limit value or less unless otherwise indicated.

In the description herein, the numerical values in the examples are numerical values that can be used as an upper limit value or a lower limit value.

In the following description, the "polyalkylene glycol based compound" may be abbreviated as a "PAG based compound" in some cases.

The following embodiments are useful for further understanding the invention.

### [Embodiments of Refrigerator Oil Composition]

The refrigerator oil composition of the present disclosure is a refrigerator oil composition that is used with a refrigerant containing a hydrocarbon based refrigerant, and contains one or more kind selected from a polyalkylene glycol based compound (A) having a number average molecular weight of 1,100 or more represented by the following general formula (1): 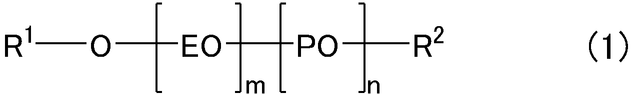 wherein in the general formula (1), one of R¹ and R² represents a hydrogen atom, and the other thereof represents a linear or branched alkyl group having 1 or more and 16 or less carbon atoms, E represents an ethylene group, P represents a propylene group, and m and n each represent a number of 0 or more, provided that m+n is 1 or more and 50 or less.

The present inventors have made earnest investigations for solving the problem. As a result, it has been found that the PAG based compound (A) represented by the general formula (1) has an appropriate dissolution viscosity in the case where a hydrocarbon based refrigerant is dissolved therein, and has a low solubility of a hydrocarbon based refrigerant, and thus the present invention has been completed.

The mechanism for achieving the effects of the present invention is not clear, but for example, can be estimated as follows. Specifically, it can be estimated that the mechanism is derived from the molecular structure of the PAG based compound (A) having a number average molecular weight of 1,100 or more represented by the general formula (1), which is excellent in balance for solving the problem.

In the refrigerator oil composition, the PAG based compound (A) functions as a base oil.

The refrigerator oil composition may be constituted only by the PAG based compound (A), and may contain a component other than the PAG based compound (A) in such a range that does not impair the effects of the present invention.

In the refrigerator oil composition, the content of the PAG based compound (A) is preferably 80% by mass or more, more preferably 85% by mass or more, further preferably 90% by mass or more, still further preferably 95% by mass or more, still more further preferably 99% by mass or more, and even further preferably 100% by mass, based on the total amount (100% by mass) of the refrigerator oil composition. The content of the PAG based compound (A) may be 100% by mass or less based on the total amount (100% by mass) of the refrigerator oil composition.

The components contained in the refrigerator oil composition will be described in detail below.

### <PAG based Compound (A)>

The refrigerator oil composition contains a PAG based compound (A).

The PAG based compound (A) is one or more kind selected from a compound represented by the following general formula (1).

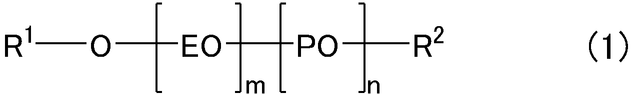

In the general formula (1), one of R¹ and R² represents a hydrogen atom, and the other thereof represents a linear or branched alkyl group having 1 or more and 16 or less carbon atoms.

In the case where both R¹ and R² represent linear or branched alkyl groups having 1 or more and 16 or less carbon atoms, the PAG based compound (A) itself has a lowered viscosity, and provides a lower dissolution viscosity in the case where a hydrocarbon based refrigerant is dissolved therein.

In the case where both R¹ and R² represent hydrogen atoms, the polarity of the molecule is increased, which may negate the compatibility with a hydrocarbon based refrigerant, and furthermore, the viscosity index thereof is lowered, which may be disadvantageous in retaining the viscosity at a high temperature.

In the case where the number of carbon atoms of the alkyl group that can be selected as one of R¹ and R² is 17 or more, the solubility of the hydrocarbon based refrigerant in the PAG based compound (A) is increased.

While it suffices that the number of carbon atoms of the alkyl group that can be selected as one of R¹ and R² is 1 or more, the number of carbon atoms thereof is preferably 2 or more, more preferably 3 or more, and further preferably 4 or more, from the standpoint of allowing the viscosity of the PAG based compound (A) itself to be in the more appropriate range, and the standpoint of preventing the dissolution viscosity in the case where a hydrocarbon based refrigerant is dissolved therein from being decreased, so as to facilitate the achievement of the more appropriate dissolution viscosity. The number of carbon atoms thereof is preferably 14 or less, more preferably 12 or less, and further preferably 10 or less, from the standpoint of facilitating the decrease of the solubility of a hydrocarbon based refrigerant in the PAG based compound (A).

The upper limit values and the lower limit values of these numerical ranges each can be optionally combined. Specifically, the number of carbon atoms thereof is preferably 2 to 14, more preferably 3 to 12, and further preferably 4 to 10.

The alkyl group that can be selected as one of R¹ and R² may be linear or branched, and is preferably linear from the standpoint of enhancing the viscosity index for facilitating the enhancement of the viscosity characteristics of the PAG based compound (A) (in other words, the standpoint of facilitating the regulation of the viscosity to the appropriate range over a wide range of temperature).

Examples of the linear or branched alkyl group that can be selected as one of R¹ and R² include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, and a hexadecyl group.

In the case where the alkyl group that can be selected as one of R¹ and R² is branched, the branch position and the number of branches are not particularly limited.

In the general formula (1), E represents an ethylene group, and P represents a propylene group. Therefore, in the general formula (1), "EO" means an oxyethylene group, and "PO" means an oxypropylene group.

In the general formula (1), m and n each represent a number of 0 or more, provided that m+n is 1 or more and 50 or less.

Therefore, the PAG based compound (A) represented by the general formula (1) may contain only an oxyethylene group, may contain only an oxypropylene group, and may contain both an oxyethylene group and an oxypropylene group.

In the case where m+n exceeds 50, the viscosity of the PAG based compound (A) itself becomes too high, and it is difficult to regulate the viscosity of the PAG based compound (A) itself to the appropriate range.

The value of m+n is preferably 4 to 40, more preferably 5 to 30, further preferably 7 to 24, still further preferably 9 to 24, and still more further preferably 10 to 24, from the standpoint of facilitating the regulation of the viscosity of the PAG based compound (A) itself to the more appropriate range.

In the description herein, the value of m is the average value of the number of the EO unit (i.e., the average number of moles added), and the value of n is the average value of the number of the PO unit (i.e., the average number of moles added).

In the general formula (1), n is preferably 1 or more. In other words, the PAG based compound (A) represented by the general formula (1) preferably contains an oxypropylene group.

In the case where n is 1 or more, the low temperature fluidity of the PAG based compound (A) can be easily secured.
n is preferably 3 or more, more preferably 5 or more, and further preferably 7 or more, from the standpoint of further facilitating the securement of the low temperature fluidity of the PAG based compound (A).

In the general formula (1), m/n is preferably 1 or less.

In the case where m/n is 1 or less, the low temperature fluidity of the PAG based compound (A) can be easily secured.
m/n is preferably less than 1.0, more preferably 0.80 or less, and further preferably 0.60 or less, from the standpoint of further facilitating the securement of the low temperature fluidity of the PAG based compound (A).
m/n is preferably 0.02 or more, more preferably 0.10 or more, further preferably 0.20 or more, still further preferably 0.30 or more, and still more further preferably 0.40 or more, from the standpoint of preventing the dissolution viscosity in the case where a hydrocarbon based refrigerant is dissolved in the PAG based compound (A) from being decreased, and the standpoint of facilitating the decrease of the solubility of a hydrocarbon based refrigerant in the PAG based compound (A).

The upper limit values and the lower limit values of these numerical ranges each can be optionally combined. Specifically, m/n is preferably 0.02 or more and less than 1.0, more preferably 0.10 to 0.80, further preferably 0.20 to 0.60, still further preferably 0.30 to 0.60, and still more further preferably 0.40 to 0.60.

### <Method of producing PAG based Compound (A)>

The method of producing the PAG based compound (A) is not particularly limited, and the PAG based compound (A) can be produced by homopolymerizing propylene oxide with an initiator which is one or more kind selected from an alcohol including a linear or branched alkyl group having 1 or more and 16 or less carbon atoms that can be selected as one of R¹ and R² in the general formula (1) and a hydroxy group and an alkali metal salt of the alcohol, or by copolymerizing propylene oxide and ethylene oxide at the prescribed molar ratio with the initiator.

The preferred embodiments of the linear or branched alkyl group having 1 or more and 16 or less carbon atoms constituting the alcohol are the same as described in detail for R¹ and R² in the general formula (1).

Examples of the alkali metal salt of the alcohol include a sodium alkoxide and a potassium alkoxide, and among these, a sodium alkoxide is preferred.

### <Number Average Molecular Weight of PAG based Compound (A)>

The number average molecular weight of the PAG based compound (A) is 1,100 or more.

In the case where the number average molecular weight of the PAG based compound (A) is less than 1,100, the viscosity of the PAG based compound (A) itself is lowered to lower the dissolution viscosity in the case where a hydrocarbon based refrigerant is dissolved therein.

The number average molecular weight of the PAG based compound (A) is preferably 1,200 or more, more preferably 1,300 or more, further preferably 1,400 or more, still further preferably 1,500 or more, still more further preferably 1,600 or more, and even further preferably 1,700 or more, from the standpoint of regulating the viscosity of the PAG based compound (A) itself to the appropriate range.

The number average molecular weight thereof is preferably 10,000 or less from the standpoint of the oil return capability.

In the description herein, the number average molecular weight of the PAG based compound (A) means a polystyrene conversion value that is measured by the method shown in the examples described later.

### <Kinematic Viscosity of PAG based Compound (A)>

The kinematic viscosity at 40°C of the PAG based compound (A) is preferably 20 mm²/s or more, more preferably 30 mm²/s or more, and further preferably 40 mm²/s or more, from the standpoint of suppressing the wear of the sliding part of the compressor and the like in the refrigerator, and is preferably 350 mm²/s or less, more preferably 320 mm²/s or less, and further preferably 300 mm²/s or less, from the standpoint of the oil return capability.

The upper limit values and the lower limit values of these numerical ranges each can be optionally combined. Specifically, the kinematic viscosity at 40°C thereof is preferably 20 mm²/s to 350 mm²/s, more preferably 30 mm²/s to 320 mm²/s, and further preferably 40 mm²/s to 300 mm²/s.

The kinematic viscosity at 100°C of the PAG based compound (A) is preferably 4 mm²/s or more, more preferably 6 mm²/s or more, further preferably 8 mm²/s or more, and still further preferably 9 mm²/s or more, from the standpoint of suppressing the wear of the sliding part of the compressor and the like in the refrigerator, and is preferably 70 mm²/s or less, more preferably 60 mm²/s or less, and further preferably 50 mm²/s or less, from the standpoint of the oil return capability.

The upper limit values and the lower limit values of these numerical ranges each can be optionally combined. Specifically, the kinematic viscosity at 100°C thereof is preferably 4 mm²/s to 70 mm²/s, more preferably 6 mm²/s to 70 mm²/s, further preferably 8 mm²/s to 60 mm²/s, and still further preferably 9 mm²/s to 50 mm²/s.

In the description herein, the kinematic viscosity of the PAG based compound (A) means a value that is measured according to JIS K2283:2000.

### <Viscosity Index of PAG based Compound (A)>

The viscosity index of the PAG based compound (A) is preferably 120 or more, more preferably 140 or more, further preferably 160 or more, still further preferably 170 or more, and still more further preferably 180 or more, from the standpoint of facilitating the enhancement of the viscosity characteristics of the PAG based compound (A) (in other words, the standpoint of facilitating the regulation of the viscosity to the appropriate range over a wide range of temperature). The upper limit value of the viscosity index of the PAG based compound (A) is not particularly limited, and is generally 300 or less.

In the description herein, the viscosity index of the PAG based compound (A) means a value that is calculated based on the measured value of the kinematic viscosity according to JIS K2283:2000.

### <Hydroxyl Value of PAG based Compound (A)>

The hydroxyl value of the PAG based compound (A) is10 mgKOH/g or more, more preferably 20 mgKOH/g or more, further preferably 30 mgKOH/g or more, still further preferably 40 mgKOH/g or more, still more further preferably 50 mgKOH/g or more, from the standpoint of facilitating the effects of the present invention, and is preferably 150 mgKOH/g or less.

In the description herein, the hydroxyl value of the PAG based compound (A) means a value that is measured by the neutralization titration method according to JIS K0070:1992.

### <Base Oil other than PAG based Compound (A)>

The refrigerator oil composition may further contain or may not contain a base oil other than the PAG based compound (A).

Examples of the base oil other than the PAG based compound (A) include one or more kind selected from the group consisting of a mineral oil and a synthetic oil that is not encompassed in the PAG based compound (A).

Examples of the mineral oil include an atmospheric residual oil obtained by subjecting a crude oil, such as a paraffin based crude oil, an intermediate based crude oil, and a naphthene based crude oil, to atmospheric distillation; a distillate oil obtained by subjecting the atmospheric residual oil to distillation under reduced pressure; a mineral oil obtained by subjecting the distillate oil to one or more treatment of solvent deasphalting, solvent extraction, hydrocracking, solvent dewaxing, catalytic dewaxing, hydrorefining, and the like; and a wax isomerization mineral oil.

One kind of the mineral oil may be used alone, or two or more kinds thereof may be used in combination.

Examples of the synthetic oil that is not encompassed in the PAG based compound (A) include a polyvinyl ether compound; a polyalkylene glycol compound that is not encompassed in the PAG based compound (A); a copolymer of a polyalkylene glycol or a monoether thereof and a polyvinyl ether; a polyol ester compound; a polyester compound; a polycarbonate compound; a hydrogenated product of an α-olefin oligomer; an alicyclic hydrocarbon compound; an alkylated aromatic hydrocarbon compound; and a GTL base oil produced through isomerization of GTL wax (gas-to-liquid wax) produced through the Fischer-Tropsch process or the like.

One kind of the synthetic oil may be used alone, or two or more kinds thereof may be used in combination.

The content of the mineral oil is preferably small from the standpoint of facilitating the effects of the present invention. Specifically, the content of the mineral oil is preferably less than 10 parts by mass, more preferably less than 1 part by mass, and further preferably less than 0.1 part by mass, per 100 parts by mass of the PAG based compound (A), and it is still further preferred that the mineral oil is not contained.

The content of the synthetic oil that is not encompassed in the PAG based compound (A) is preferably small from the same standpoint. Specifically, the content of the synthetic oil that is not encompassed in the PAG based compound (A) is preferably less than 100 parts by mass, more preferably less than 50 parts by mass, further preferably less than 30 parts by mass, still further preferably less than 10 parts by mass, still more further preferably less than 1 part by mass, even further preferably less than 0.1 part by mass, per 100 parts by mass of the PAG based compound (A), and it is even still further preferred that the synthetic oil that is not encompassed in the PAG based compound (A) is not contained.

### <Additive>

The refrigerator oil composition may further contain an additive in such a range that does not impair the effects of the present invention, or may not contain an additive.

Examples of the additive include the additives that have been generally mixed in refrigerator oil compositions.

Examples of the additive include one or more kind selected from the group consisting of an antioxidant, an oxygen scavenger, an acid scavenger, an extreme pressure agent, an oiliness agent, a metal deactivator, and an anti-foaming agent.

The total content of the additive is preferably 0% by mass to 10% by mass, more preferably 0.01% by mass to 5% by mass, and further preferably 0.1% by mass to 3% by mass, based on the total amount (100% by mass) of the refrigerator oil composition.

### (Antioxidant)

Examples of the antioxidant include a phenol based antioxidant, such as 2,6-di-tert-butyl-4-methylphenol, 2,6-di-tert-butyl-4-ethylphenol, and 2,2'-methylenebis(4-methyl-6-tertbutylphenol), and an amine based antioxidant, such as phenyl-α-naphthylamine and N,N'-diphenyl-p-phenylenediamine.

One kind of the antioxidant may be used alone, or two or more kinds thereof may be used in combination.

### (Oxygen Scavenger)

Examples of the oxygen scavenger include an aliphatic unsaturated compound and a terpene compound having a double bond.

The aliphatic unsaturated compound is preferably an unsaturated hydrocarbon, and specific examples thereof include an olefin; and a polyene, such as a diene and a triene. The olefin is preferably an α-olefin, such as 1-tetradecene, 1-hexadecene, and 1-octadecene, from the standpoint of the reactivity with oxygen.

The aliphatic unsaturated compound other than the above is preferably an unsaturated aliphatic alcohol having a conjugated double bond, such as vitamin A represented by the molecular formula C₂₀H₃₀O ((2E,4E,6E,8E)-3,7-dimethyl-9-(2,6,6-trimethylcyclohexen-1-yl)nona-2,4,6,8-tetraen-1-ol) from the standpoint of the reactivity with oxygen.

The terpene compound having a double bond is preferably a terpene based hydrocarbon having a double bond, and is more preferably α-farnesene (C₁₅H₂₄: 3,7,11-trimethyldodeca-1,3,6,10-tetraene) and β-farnesene (C₁₅H₂₄: 7,11-dimethyl-3-methylidenedodeca-1,6,10-triene) from the standpoint of the reactivity with oxygen.

One kind of the oxygen scavenger may be used alone, or two or more kinds thereof may be used in combination.

### (Acid Scavenger)

Examples of the acid scavenger include an epoxy compound, such as phenyl glycidyl ether, an alkyl glycidyl ether, an alkylene glycol glycidyl ether, cyclohexene oxide, an α-olefin oxide, and an epoxidized soybean oil, and in particular, at least one kind selected from a glycidyl ester, a glycidyl ether, and an α-olefin oxide is preferably used as the acid scavenger.

Examples of the glycidyl ether include glycidyl ethers derived from a linear, branched, or cyclic saturated or unsaturated aliphatic mono- or polyhydric alcohol having a number of carbon atoms that is generally 3 to 30, preferably 4 to 24, and more preferably 6 to 16, or an aromatic compound having one or more hydroxy group. In the case of an aliphatic polyhydric alcohol or an aromatic compound having two or more hydroxy groups, it is preferred that all the hydroxy groups are glycidyl-etherified from the standpoint of preventing the hydroxyl value from being increased, for the stabilization of the lubricating oil composition.

Among these, a glycidyl ether derived from a linear, branched, or cyclic saturated aliphatic monoalcohol having 6 to 16 carbon atoms is particularly preferred. Examples of the glycidyl ether include 2-ethylethyl glycidyl ether, isononyl glycidyl ether, caprinoyl glycidyl ether, lauryl glycidyl ether, and myristyl glycidyl ether.

The α-olefin oxide used may have a number of carbon atoms that is generally 4 to 50, preferably 4 to 24, and more preferably 6 to 16.

One kind of the acid scavenger may be used alone, or two or more kinds thereof may be used in combination.

### (Extreme Pressure Agent)

Examples of the extreme pressure agent include a phosphorus based extreme pressure agent, such as a phosphate ester, an acidic phosphate ester, a phosphite ester, an acidic phosphite ester, and amine salts thereof.

In the phosphorus based extreme pressure agent, tricresyl phosphate, trithiophenyl phosphate, tri(nonylphenyl) phosphite, dioleyl hydrogen phosphite, 2-ethylhexyl diphenyl phosphite, and the like are particularly preferred from the standpoint of the extreme-pressure property, the friction property, and the like.

Examples of the extreme pressure agent also include a metal salt of a carboxylic acid. The metal salt of a carboxylic acid herein is preferably a metal salt of a carboxylic acid having 3 to 60 carbon atoms, more preferably a carboxylic acid having 3 to 30 carbon atoms, and particularly preferably a fatty acid having 12 to 30 carbon atoms. Examples thereof also include metal salts of a dimer acid and a trimer acid of the fatty acid described above, and a metal salt of a dicarboxylic acid having 3 to 30 carbon atoms. Among these, metal salts of a fatty acid having 12 to 30 carbon atoms and a dicarboxylic acid having 3 to 30 carbon atoms are particularly preferred.

The metal constituting the metal salt is preferably an alkali metal or an alkaline earth metal, and in particular, an alkali metal is most preferred.

Examples of the extreme pressure agent also include extreme pressure agents other than the above, for example, a sulfur based extreme pressure agent, such as a sulfurized fat or oil, a sulfurized fatty acid, a sulfurized ester, a sulfurized olefin, a dihydrocarbyl polysulfide, a thiocarbamate compound, a thioterpene compound, and a dialkyl thiodipropionate compound.

One kind of the extreme pressure agent may be used alone, or two or more kinds thereof may be used in combination.

### (Oiliness Agent)

Examples of the oiliness agent include an aliphatic saturated or unsaturated monocarboxylic acid, such as stearic acid and oleic acid, a polymerized fatty acid, such as a dimer acid and a hydrogenated dimer acid, a hydroxy fatty acid, such as ricinoleic acid and 12-hydroxystearic acid, an aliphatic saturated or unsaturated monoalcohol, such as lauryl alcohol and oleyl alcohol, an aliphatic saturated or unsaturated monoamine, such as stearylamine and oleylamine, an aliphatic saturated or unsaturated monocarboxylic amide, such as lauric amide and oleic amide, and a partial ester of a polyhydric alcohol, such as glycerin and sorbitol, and an aliphatic saturated or unsaturated monocarboxylic acid.

One kind of the oiliness agent may be used alone, or two or more kinds thereof may be used in combination.

### (Metal Deactivator)

Examples of the metal deactivator include a copper deactivator, such as N-[N,N'-dialkyl(e.g., an alkyl group having 3 to 12 carbon atoms)aminomethyl]triazole.

One kind of the metal deactivator may be used alone, or two or more kinds thereof may be used in combination.

### (Anti-foaming Agent)

Examples of the anti-foaming agent include a silicone oil and a fluorinated silicone oil.

One kind of the anti-foaming agent may be used alone, or two or more kinds thereof may be used in combination.

### [Method of producing Refrigerator Oil Composition]

The method of producing a mixed composition of the present invention is as defined in the claims.

Examples of the step of mixing one or more kind selected from a PAG based compound (A) represented by the general formula (1) include a step of mixing one or more kind selected from the PAG based compound (A) that is obtained by the method of producing the PAG based compound (A) described above.

The method may further include or may not include a step of mixing the PAG based compound (A) with a base oil other than the PAG based compound (A), and a step of mixing the additive.

In the case where the additive is mixed in the PAG based compound (A), the additive may be mixed in the form of a solution (or a dispersion) having a diluent oil or the like added in advance thereto.

In the general formula (1) above, the preferred ranges of R¹, R², m, and n are the same as described for the PAG based compound (A) above.

### [Properties of Refrigerator Oil Composition]

### <Kinematic Viscosity of Refrigerator Oil Composition>

The kinematic viscosity at 40°C of the refrigerator oil composition is preferably 20 mm²/s or more, more preferably 30 mm²/s or more, and further preferably 40 mm²/s or more, and is preferably 350 mm²/s or less, more preferably 320 mm²/s or less, and further preferably 300 mm²/s or less, from the standpoint of the oil return capability.

The upper limit values and the lower limit values of these numerical ranges each can be optionally combined. Specifically, the kinematic viscosity at 40°C thereof is preferably 20 mm²/s to 350 mm²/s, more preferably 30 mm²/s to 320 mm²/s, and further preferably 40 mm²/s to 300 mm²/s.

The kinematic viscosity at 100°C of the refrigerator oil composition is preferably 4 mm²/s or more, more preferably 6 mm²/s or more, further preferably 8 mm²/s or more, and still further preferably 9 mm²/s or more, from the standpoint of suppressing the wear of the sliding part of the compressor and the like in the refrigerator, and is preferably 70 mm²/s or less, more preferably 60 mm²/s or less, and further preferably 50 mm²/s or less, from the standpoint of the oil return capability.

The upper limit values and the lower limit values of these numerical ranges each can be optionally combined. Specifically, the kinematic viscosity at 100°C thereof is preferably 4 mm²/s to 70 mm²/s, more preferably 6 mm²/s to 70 mm²/s, further preferably 8 mm²/s to 60 mm²/s, and still further preferably 9 mm²/s to 50 mm²/s.

In the description herein, the kinematic viscosity of the refrigerator oil composition means a value that is measured according to JIS K2283:2000.

### <Dissolution Viscosity of Refrigerator Oil Composition in Case where Hydrocarbon based Refrigerant is dissolved therein>

The dissolution viscosity of the refrigerator oil composition in the case where a hydrocarbon based refrigerant is dissolved therein, which is measured by the method shown in the examples described later, is preferably 2.20 mm²/s or more, more preferably 2.50 mm²/s or more, further preferably 3.00 mm²/s or more, still further preferably 3.50 mm²/s or more, and still more further preferably 3.70 mm²/s or more, from the standpoint of suppressing the wear of the sliding part of the compressor and the like in the refrigerator, and is preferably 50 mm²/s or less.

The dissolution viscosity is a value that is measured in the state where a hydrocarbon based refrigerant is dissolved in the refrigerator oil composition. Therefore, the dissolution viscosity can also be considered as the viscosity of the mixed composition for a refrigerator that is measured by the method shown in the examples described later.

### <Solubility of Hydrocarbon based Refrigerant in Refrigerator Oil Composition>

The solubility of a hydrocarbon based refrigerant in the refrigerator oil composition, which is measured by the method shown in the examples described later, is preferably less than 18.0% by mass, more preferably 17.0% by mass or less, further preferably 16.5% by mass or less, still further preferably 16.0% by mass or less, and still more further preferably 15.5% by mass or less, from the standpoint of suppressing the used amount of a hydrocarbon based refrigerant for facilitating the securement of the safety, and is preferably 1% by mass or more.

### [Mixed Composition for Refrigerator]

The refrigerator oil composition is mixed with a refrigerant and used as a mixed composition for a refrigerator.

Accordingly, the mixed composition for a refrigerator contains the refrigerator oil composition and a refrigerant.

The refrigerant will be described below.

### <Refrigerant>

### (Hydrocarbon based Refrigerant>

The refrigerant used is a refrigerant containing a hydrocarbon based refrigerant.

The hydrocarbon based refrigerant is preferably a hydrocarbon having 1 or more and 8 or less carbon atoms, more preferably a hydrocarbon having 1 or more and 5 or less carbon atoms, and further preferably a hydrocarbon having 3 or more and 5 or less carbon atoms. A hydrocarbon having 8 or less carbon atoms is preferred since the boiling point of the refrigerant is not too high, which is preferred as a refrigerant. Examples of the hydrocarbon based refrigerant include one or more kind selected from the group consisting of methane, ethane, ethylene, propane (R290), cyclopropane, propylene, n-butane, isobutane (R600a), 2-methylbutane, n-pentane, isopentane, cyclopentane, isobutane, and n-hexane.

One kind of the hydrocarbon based refrigerant may be used alone, or two or more kinds thereof may be used in combination.

### (Additional Refrigerant)

The refrigerant may be a mixed refrigerant containing an additional refrigerant depending on necessity in addition to the hydrocarbon based refrigerant.

Examples of the additional refrigerant include one or more kind selected from a saturated fluorinated hydrocarbon refrigerant, an unsaturated fluorinated hydrocarbon refrigerant, carbon dioxide, and ammonia.

The saturated fluorinated hydrocarbon refrigerant and the unsaturated fluorinated hydrocarbon refrigerant will be described below.

### Saturated Fluorinated Hydrocarbon Refrigerant

The saturated fluorinated hydrocarbon refrigerant is preferably a fluorinated product of an alkane having 1 to 4 carbon atoms, more preferably a fluorinated product of an alkane having 1 to 3 carbon atoms, and further preferably a fluorinated product of an alkane having 1 or 2 carbon atoms (i.e., methane or ethane). Examples of the fluorinated product of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1, 1,2,2-tetrafluoroethane (R134), and 1,1,1,2,2-pentafluoroethane (R125).

One kind of the compound may be used alone, or two or more kinds thereof may be used in combination.

### Unsaturated Fluorinated Hydrocarbon Refrigerant

Examples of the unsaturated fluorinated hydrocarbon refrigerant include a compound represented by the following general formula (3):

CₓF_{y}H_{z} (3)

wherein in the general formula (3), x represents an integer of 2 to 6, y represents an integer of 1 to 11, and z represents an integer of 1 to 11, provided that the molecule contains one or more carbon-carbon unsaturated bond.

The general formula (3) shows the kinds and the numbers of the elements in the molecule, and specifically represents an unsaturated fluorinated hydrocarbon compound having a number of carbon atoms C of 2 to 6. An unsaturated fluorinated hydrocarbon compound having a number of carbon atoms of 2 to 6 has physical and chemical properties, such as a boiling point, a freezing point, and an evaporation latent heat, which are demanded as a refrigerant.

In the general formula (3), examples of the bonding mode of the x carbon atoms represented by Cₓ include a carbon-carbon single bond and an unsaturated bond, such as a carbon-carbon double bond. The carbon-carbon unsaturated bond is preferably a carbon-carbon double bond from the standpoint of the stability, and an unsaturated fluorinated hydrocarbon compound has one or more unsaturated bond, such as a carbon-carbon double bond, in the molecule, in which the number thereof is preferably 1. Accordingly, it is more preferred that at least one of the bonding modes of the x carbon atoms represented by Cₓ is a carbon-carbon double bond.

Preferred examples of the unsaturated fluorinated hydrocarbon compound include fluorinated products of a linear or branched chain-like olefin having 2 to 6 carbon atoms and a cyclic olefin having 4 to 6 carbon atoms.

Specific examples thereof include a fluorinated product of ethylene having 1 to 3 fluorine atoms introduced thereto, a fluorinated product of propene having 1 to 5 fluorine atoms introduced thereto, a fluorinated product of butene having 1 to 7 fluorine atoms introduced thereto, a fluorinated product of pentene having 1 to 9 fluorine atoms introduced thereto, a fluorinated product of hexene having 1 to 11 fluorine atoms introduced thereto, a fluorinated product of cyclobutene having 1 to 5 fluorine atoms introduced thereto, a fluorinated product of cyclopentene having 1 to 7 fluorine atoms introduced thereto, and a fluorinated product of cyclohexene having 1 to 9 fluorine atoms introduced thereto.

Among these, a fluorinated product of propene is preferred, and propene having 3 to 5 fluorine atoms introduced thereto is more preferred. Specifically, one or more kind selected from 1,3,3,3-tetrafluoropropene (R1234ze), 2,3,3,3-tetrafluoropropene (R1234yf), and 1,2,3,3-tetrafluoropropene (R1234ye) is preferred, and 2,3,3,3-tetrafluoropropene (R1234yf) is more preferred.

One kind of the unsaturated fluorinated hydrocarbon refrigerant may be used alone, or two or more kinds thereof may be used in combination.

### (Content of Hydrocarbon based Refrigerant in Refrigerant)

The refrigerant contains the hydrocarbon based refrigerant.

The content of the hydrocarbon based refrigerant is preferably 20% by mass to 100% by mass, more preferably 30% by mass to 100% by mass, further preferably 40% by mass to 100% by mass, still further preferably 50% by mass to 100% by mass, still more further preferably 60% by mass to 100% by mass, even further preferably 70% by mass to 100% by mass, even still further preferably 80% by mass to 100% by mass, and even still more further preferably 90% by mass to 100% by mass, based on the total amount of the refrigerant.

### (Used Amounts of Refrigerant and Refrigerator Oil Composition)

In the mixed composition for a refrigerator of the present invention, the used amounts of the refrigerant and the refrigerator oil composition in terms of mass ratio of the refrigerator oil composition and the refrigerant ((refrigerator oil composition)/(refrigerant)) are preferably 30/70 to 90/10. In the case where the mass ratio of the refrigerator oil composition and the refrigerant is in the range, a lubricity and a favorable refrigeration capability in a refrigerator can be obtained.

### [Application of Refrigerator Oil Composition and Mixed Composition for Refrigerator]

The refrigerator oil composition and the mixed composition for a refrigerator of the present disclosure are preferably applied, for example, to a refrigeration system, a hot-water supply system, or an air heating system. Specific examples thereof include an air conditioner, a refrigerator, a freezer, an automatic vending machine, and a showcase. Examples of the air conditioner include a car air conditioner, such as an open type car air conditioner and an electric car air conditioner, and a gas heat pump (GHP) air conditioner.

### Examples

The present invention will be described more specifically with reference to examples below. However, the present invention is not limited to the examples.

### [Measurement Methods of Property Values]

The properties of the raw materials used in Examples and Comparative Examples and the refrigerator oil compositions of Examples and Comparative Examples were measured according to the following procedures.

### (1) Kinematic Viscosity

The kinematic viscosity at 40°C, the kinematic viscosity at 80°C, and the kinematic viscosity at 100°C were measured according to JIS K2283:2000.

### (2) Viscosity Index

The viscosity index was calculated based on the measurement results of the kinematic viscosity according to JIS K2283:2000.

### (3) Hydroxyl Value

The hydroxyl value was measured by the neutralization titration method according to JIS K0070:1992.

### (4) Number Average Molecular Weight

The number average molecular weight of the PAG compound was measured by gel permeation chromatography (GPC). The GPC was performed by using HLC-8120GPC, SC-8020 (available from Tosoh Corporation), with THF (Tetrahydrofuran) as an eluent, and an IR detector. The number average molecular weight was obtained from the result thereof according to the calibration curve using the standard polystyrene samples.

### [Production Examples 1 to 5 and Comparative Production Examples 1 and 2]

PAG based compounds were synthesized in Production Examples 1 to 5 and Comparative Production Examples 1 and 2 below.

### <Production Example 1: Synthesis of PAG based Compound (A)-1>

5.4 g (0.056 mol) of sodium n-butoxide in the form of powder was added to a 200 mL stainless steel autoclave equipped with an agitator and a liquid introducing tube, which was then sealed and heated to 105°C, and 77 g (1.32 mol) of propylene oxide was then pressure-fed into the autoclave through the liquid introducing tube with agitating over 9 hours. 100 mL of water and 200 mL of methanol were added to the reaction mixture to dissolve it, and the solution was then passed through a column filled with 200 mL of a cation exchange resin and then through a column filled with 200 mL of an anion exchange resin for removing sodium ion. After distilling off methanol and water, the residue was dried under reduced pressure (0.4 mmHg) with a vacuum pump at 100°C for 1 hour, so as to provide 70 g of polyoxypropylene glycol mono-n-butyl ether as the target.

The PAG based compound (A)-1 obtained in Production Example 1 is represented by the general formula (1), in which R¹ represents a n-butyl group, R² represents a hydrogen atom, m = 0, n = 17, and m/n = 0.

### <Production Example 2: Synthesis of PAG based Compound (A)-2>

69 g of polyoxyethylene polyoxypropylene glycol mono-n-butyl ether (PO/EO = 96/4 (molar ratio)) was obtained in the same manner as in Production Example 1 except that 73.5 g (1.27 mol) of propylene oxide and 2.4 g (0.05 mol) of ethylene oxide were used instead of 77 g (1.32 mol) of propylene oxide.

The PAG based compound (A)-2 obtained in Production Example 2 is represented by the general formula (1), in which R¹ represents a n-butyl group, R² represents a hydrogen atom, m = 0.7, n = 16.5, and m/n = 0.04.

### <Production Example 3: Synthesis of PAG based Compound (A)-3>

68 g of polyoxyethylene polyoxypropylene glycol mono-n-butyl ether (PO/EO = 88/12 (molar ratio)) was obtained in the same manner as in Production Example 1 except that 67.3 g (1.16 mol) of propylene oxide and 7.1 g (0.16 mol) of ethylene oxide were used instead of 77 g (1.32 mol) of propylene oxide.

The PAG based compound (A)-3 obtained in Production Example 3 is represented by the general formula (1), in which R¹ represents a n-butyl group, R² represents a hydrogen atom, m = 2.0, n = 14.4, and m/n = 0.14.

### <Production Example 4: Synthesis of PAG based Compound (A)-4>

65 g of polyoxyethylene polyoxypropylene glycol mono-n-butyl ether (PO/EO = 70/30 (molar ratio)) was obtained in the same manner as in Production Example 1 except that 53.7 g (0.92 mol) of propylene oxide and 7.4 g (0.40 mol) of ethylene oxide were used instead of 77 g (1.32 mol) of propylene oxide.

The PAG based compound (A)-4 obtained in Production Example 4 is represented by the general formula (1), in which R¹ represents a n-butyl group, R² represents a hydrogen atom, m = 5.0, n = 11.7, and m/n = 0.42.

### <Production Example 5: Synthesis of PAG based Compound (A)-5>

72 g of polyoxypropylene glycol mono-n-dodecyl ether was obtained in the same manner as in Production Example 1 except that 10 g (0.056 mol) of n-dodecanol was used instead of 5.4 g (0.056 mol) of sodium n-butoxide in the form of powder.

The PAG based compound (A)-5 obtained in Production Example 5 is represented by the general formula (1), in which R¹ represents a n-dodecyl group, R² represents a hydrogen atom, m = 0, n = 20, and m/n = 0.

### <Comparative Production Example 1: Synthesis of PAG based Compound (A')-1>

3.0 g (0.056 mol) of sodium methoxide in the form of powder was added to a 200 mL stainless steel autoclave equipped with an agitator and a liquid introducing tube, which was then sealed and heated to 105°C, and 77 g (1.32 mol) of propylene oxide was then pressure-fed into the autoclave through the liquid introducing tube with agitating over 9 hours. 100 mL of water and 200 mL of methanol were added to the reaction mixture to dissolve it, and the solution was then passed through a column filled with 200 mL of a cation exchange resin and then through a column filled with 200 mL of an anion exchange resin for removing sodium ion. After distilling off methanol and water, the residue was dried under reduced pressure (0.4 mmHg) with a vacuum pump at 100°C for 1 hour, so as to provide 70 g of polyoxypropylene glycol monomethyl ether.

Subsequently, in a 300 mL glass three-neck flask equipped with an agitator and a distillation head, 50 g of polyoxypropylene glycol monomethyl ether obtained in the procedure above and 80 mL of toluene were placed, and approximately 20 mL of toluene was distilled off under heating and agitating for removing water. After cooling, 25 g (0.13 mol) of a 28% by weight methanol solution of sodium methoxide was added thereto, and methanol and approximately 20 mL of toluene were distilled off under heating.

After cooling, the content was transferred to a 300 mL stainless steel autoclave equipped with an agitator, to which 36.8 g (0.26 mol) of methyl iodide was added, and after sealing, the mixture was heated from 50°C to 70°C over 4.5 hours with agitating, and reacted at 85°C for 12 hours. After cooling to room temperature, the reaction mixture was dissolved in a mixture of 100 mL of water and 200 mL of methanol, which was then passed through a column filled with 200 mL of a cation exchange resin and then through a column filled with 200 mL of an anion exchange resin. After distilling off the solvent, the residue was dried under reduced pressure (0.1 mmHg) with a vacuum pump at 100°C for 1 hour, so as to provide 42.5 g of the PAG based compound (A')-1 (polyoxypropylene glycol dimethyl ether).

The PAG based compound (A')-1 obtained in Comparative Production Example 1 is represented by the general formula (1), in which R¹ and R² each represent a methyl group, m = 0, n = 12, and m/n = 0.

### <Comparative Production Example 2: Synthesis of PAG based Compound (A')-2>

73 g of polyoxypropylene glycol monomethyl ether was obtained in the same manner as in Production Example 1 except that 9.0 g (0.167 mol) of sodium methoxide was used instead of 5.4 g (0.056 mol) of sodium n-butoxide in the form of powder.

The PAG based compound (A')-2 obtained in Comparative Production Example 2 is represented by the general formula (1), in which R¹ represents a methyl group, R² represents a hydrogen atom, m = 0, n = 5, and m/n = 0.

### [Examples 1 to 5 and Comparative Examples 1 to 4]

In Examples 1 to 5 and Comparative Examples 1 to 4, the following compounds and the like were used as a refrigerator oil composition, and subjected to the evaluation described later.
- Example 1: PAG based compound (A)-1 obtained in Production Example 1
- Example 2: PAG based compound (A)-2 obtained in Production Example 2
- Example 3: PAG based compound (A)-3 obtained in Production Example 3
- Example 4: PAG based compound (A)-4 obtained in Production Example 4
- Example 5: PAG based compound (A)-5 obtained in Production Example 5
- Comparative Example 1: PAG based compound (A')-1 obtained in Comparative Production

### Example 1

- Comparative Example 2: PAG based compound (A')-2 obtained in Comparative Production

### Example 1

- Comparative Example 3: poly-α-olefin (PAO)
- Comparative Example 4: mineral oil

### <Evaluation: Evaluation of Dissolution Viscosity and Solubility>

### (Evaluation of Solubility)

Prescribed amounts of the refrigerator oil composition and R290 as a refrigerant were injected into pressure tight container made of sapphire glass, and the temperature of the pressure tight container was raised from room temperature (23°C) to 80°C. A temperature-pressure-solubility curve was prepared by calculation based on the volume of the refrigerator oil composition having R290 dissolved therein and the pressure at that time. The solubility (% by mass) of R290 in the refrigerator oil composition at 80°C and 2.0 MPa was calculated from the prepared solubility curve.

### (Evaluation of Dissolution Viscosity)

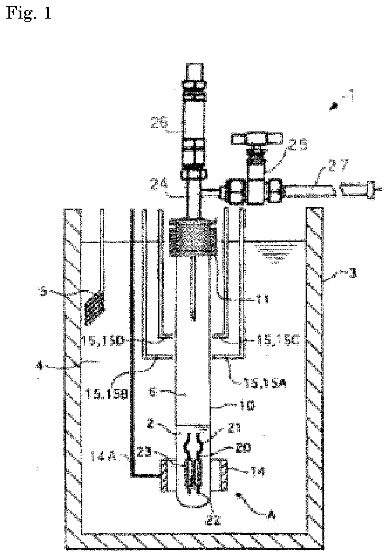

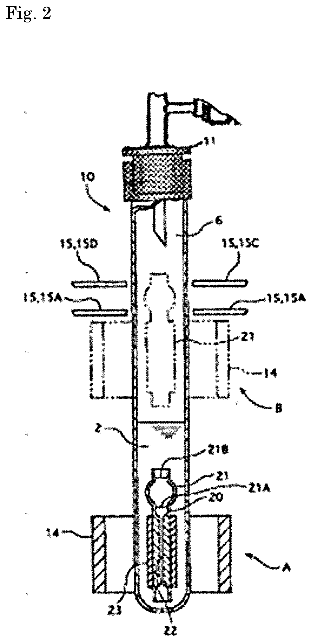

The dissolution viscosity of the refrigerator oil composition having a refrigerant dissolved therein was measured by using a viscosity measuring device 1 shown in Figs. 1 to 3.

A prescribed amount of the refrigerator oil composition 2 and a capillary viscometer 20 were placed in a container 10 made of sapphire glass tube, which was then closed with a lid 11. A safety valve 26 and a needle valve 25 were attached to a T-joint 24, and the container 10 was immersed in a thermostat chamber 3 filled with a heating medium 4. The temperature of the heating medium 4 was retained to 80°C with a temperature regulation means 5.

Subsequently, the needle valve 25 and a refrigerant collection line (not shown in the figures) were connected through a pressure resistant hose 27, and the interior of the container 10 and the refrigerant collection line was evacuated to approximately 13.3 Pa with a vacuum pump (not shown in the figures). After completing the evacuation, the vacuum pump was stopped, and a main valve of a refrigerant container was opened to introduce the refrigerant (R290) to the container 10. The refrigerant was introduced to make a pressure of the container 10 of 2.0 MPa.

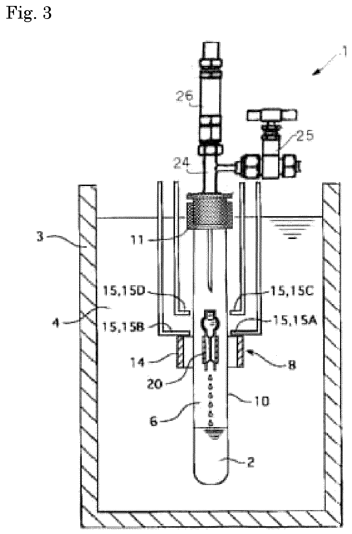

After introducing the refrigerant, the needle valve 25 was closed, the valve of the refrigerant container was closed, and after releasing the pressure resistant hose 27, the sealed container 10 was disposed at the prescribed position inside the thermostat chamber 3, in which a permanent magnet 14 had been allowed to descend to a position A. After the entire container 10 reached the thermal equilibrium condition, a driving means for moving the permanent magnet 14 was started to move the permanent magnet 14, and thereby the capillary viscometer 20 was allowed to rise to a position B. According to the procedure, as shown in Fig. 3, the refrigerator oil composition 2 having the refrigerant dissolved therein was dropped from the capillary viscometer 20, and thus the fluid level of the refrigerator oil composition 2 having the refrigerant dissolved therein was descending. The passage of the fluid level of the refrigerator oil composition 2 having the refrigerant dissolved therein at a gauge line 21B and a gauge line 21A was detected with optical fibers 15 (15A, 15B, 15C, 15D), thereby automatically measuring the period of time of passing the refrigerator oil composition 2 having the refrigerant dissolved therein through the interior of a capillary 22 with a viscosity calculator, and simultaneously the viscosity was automatically measured thereby, so as to measure the dissolution viscosity. The dissolution viscosity was measured after confirming that the refrigerant and the refrigerator oil composition were not separated from each other.

In Figs. 1 to 3, numeral 6 denotes a gas charged in the container 10, numeral 14A denotes an arm retaining the permanent magnet 14, numeral 21 denotes a liquid reservoir, and numeral 23 denotes a belt-like outer ring made of a magnetic material fixed to the outer circumferential surface of the side wall of the capillary 22.

The evaluation standard of the dissolution viscosity was as follows, in which the grades A and B were acceptable.
Grade A: exceeding 3.50 mm²/s
Grade B: 2.20 mm²/s or more and 3.50 mm²/s or less
Grade C: less than 2.20 mm²/s

A higher dissolution viscosity can provide good lubricity in the case where a hydrocarbon based refrigerant is dissolved therein, and thus can be considered as an appropriate dissolution viscosity provided.

The evaluation standard of the solubility was as follows, in which the grades A and B were acceptable.
Grade A: less than 15.0% by mass
Grade B: 15.0% by mass or more and less than 18.0% by mass
Grade C: 18.0% by mass or more

A lower solubility facilitates the regulation of the dissolution of a hydrocarbon based refrigerant.

The results are shown in Table 1.

**Table 1**

| | | | Unit | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|---|
| Base oil | | | - | PAG based compound (A)-1 | PAG based compound (A)-2 | PAG based compound (A)-3 | PAG based compound (A)-4 | PAG based compound (A)-5 | PAG based compound (A')-1 | PAG based compound (A')-2 | PAO | Mineral oil |
| Number average molecular weight Mn (PS conversion) | | | - | 1875 | 1887 | 1797 | 1786 | 2029 | 1332 | 813 | | |
| Hydroxyl value | | | mgKOH/g | 55.2 | 52.7 | 56.9 | 61.1 | 43.4 | 8.8 | 126 | 3 > | 3 > |
| Properties | Kinematic viscosity | 40°C | mm²/s | 52.36 | 49.70 | 47.96 | 46.37 | 65.81 | 32.46 | 13.79 | 64.32 | 52.84 |
| | Kinematic viscosity | 80°C | mm²/s | 15.79 | 15.18 | 14.96 | 14.72 | 19.36 | 10.78 | 4.53 | 15.96 | 10.23 |
| | Kinematic viscosity | 100°C | mm²/s | 10.20 | 9.86 | 9.77 | 9.67 | 12.37 | 7.214 | 3.075 | 9.76 | 5.94 |
| | Viscosity index | | - | 187 | 189 | 195 | 200 | 189 | 196 | 67 | 134 | 21 |
| Evaluation results | Condition: 80°C, 2.0 MPa | Dissolution viscosity | mm²/s | 3.823 | 3.840 | 4.391 | 5.556 | 4.261 | 2.066 | 2.165 | 1.998 | 1.294 |
| | | Evaluation of dissolution viscosity | - | A | A | A | A | A | C | C | C | C |
| | | Solubility | % by mass | 14.5 | 14.6 | 13.5 | 9.8 | 15.9 | 18.0 | 17.3 | 22.2 | 22.3 |
| | | Evaluation of solubility | - | A | A | A | A | B | C | B | C | C |

The following can be understood from Table 1.

It is understood that the PAG based compounds of Examples 1 to 5 each have a high dissolution viscosity in the case where a hydrocarbon based refrigerant is dissolved therein, and a low solubility of a hydrocarbon based refrigerant.

On the other hand, it is understood that the PAG based compound of Comparative Example 1, the PAO of Comparative Example 3, and the mineral oil of Comparative Example 4 each have a low dissolution viscosity in the case where a hydrocarbon based refrigerant is dissolved therein, and a high solubility of a hydrocarbon based refrigerant.

It is understood that the PAG based compound of Comparative Example 2 has a low dissolution viscosity in the case where a hydrocarbon based refrigerant is dissolved therein.

## Claims

1. A mixed composition for a refrigerator comprising a refrigerator oil composition and a refrigerant containing a hydrocarbon-based refrigerant,
the refrigerator oil composition comprising one or more kind selected from a polyalkylene glycol based compound (A) having a number average molecular weight of 1,100 or more, as determined by gel permeation chromatography (GPC) disclosed in the description, represented by the following general formula (1): 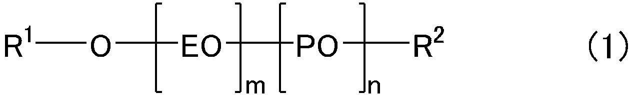
wherein in the general formula (1), one of R¹ and R² represents a hydrogen atom, and the other thereof represents a linear or branched alkyl group having 1 or more and 16 or less carbon atoms, E represents an ethylene group, P represents a propylene group, and m and n each represent a number of 0 or more, provided that m+n is 1 or more and 50 or less, and
wherein the polyalkylene glycol based compound (A) has a hydroxyl value of 10 mgKOH/g or more, as determined in accordance with JIS K0070:1992.

2. The mixed composition according to claim 1, wherein in the general formula (1), n is 1 or more.

3. The mixed composition according to claim 1 or 2, wherein in the general formula (1), m/n is 1 or less.

4. The mixed composition according to any one of claims 1 to 3, wherein the refrigerator oil composition has a content of the polyalkylene glycol based compound (A) of 80% by mass or more based on the total amount of the refrigerator oil composition.

5. The mixed composition according to any one of claims 1 to 4, wherein the hydrocarbon based refrigerant is a hydrocarbon having 1 or more and 8 or less carbon atoms.

6. A method of producing a mixed composition for a refrigerator comprising a refrigerator oil composition and a refrigerant containing a hydrocarbon-based refrigerant,
comprising a method of producing a refrigerator oil composition, comprising a step of mixing one or more kind selected from a polyalkylene glycol based compound (A) having a number average molecular weight of 1,100 or more, as determined by gel permeation chromatography (GPC) disclosed in the description, represented by the following general formula (1): 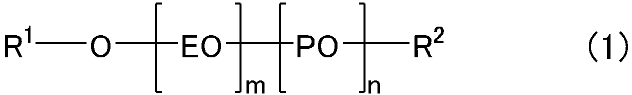
wherein in the general formula (1), one of R¹ and R² represents a hydrogen atom, and the other thereof represents a linear or branched alkyl group having 1 or more and 16 or less carbon atoms, E represents an ethylene group, P represents a propylene group, and m and n each represent a number of 0 or more, provided that m+n is 1 or more and 50 or less, and
wherein the polyalkylene glycol based compound (A) has a hydroxyl value of 10 mgKOH/g or more, as determined in accordance with JIS K0070:1992.

## Patentansprüche

1. Mischzusammensetzung für eine Kältemaschine, umfassend eine Kältemaschinenölzusammensetzung und ein Kühlmittel, das ein Kohlenwasserstoff-basiertes Kühlmittel enthält,
wobei die Kältemaschinenölzusammensetzung eine oder mehrere Arten, ausgewählt aus einer durch die folgende allgemeine Formel (1) dargestellten Polyalkylenglykol-basierten Verbindung (A) mit einem zahlenmittleren Molekulargewicht von 1.100 oder mehr, bestimmt durch Gelpermeationschromatographie (GPC) wie in der Beschreibung offenbart, umfasst: 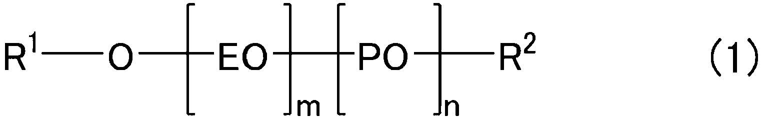
wobei in der allgemeinen Formel (1) eines von R¹ und R² ein Wasserstoffatom darstellt und das andere eine lineare oder verzweigte Alkylgruppe mit 1 oder mehr und 16 oder weniger Kohlenstoffatomen darstellt, E eine Ethylengruppe darstellt, P eine Propylengruppe darstellt und m und n jeweils eine Zahl von 0 oder größer darstellen, vorausgesetzt, dass m+n 1 oder mehr und 50 oder weniger beträgt, und
wobei die Polyalkylenglykol-basierte Verbindung (A) einen Hydroxylwert von 10 mgKOH/g oder mehr, bestimmt gemäß JIS K0070:1992, aufweist.

2. Mischzusammensetzung gemäß Anspruch 1, wobei in der allgemeinen Formel (1) n 1 oder größer ist.

3. Mischzusammensetzung gemäß Anspruch 1 oder 2, wobei in der allgemeinen Formel (1) m/n 1 oder weniger beträgt.

4. Mischzusammensetzung gemäß einem der Ansprüche 1 bis 3, wobei die Kältemaschinenölzusammensetzung einen Gehalt der Polyalkylenglykol-basierten Verbindung (A) von 80 Masse-% oder mehr, bezogen auf die Gesamtmenge der Kältemaschinenölzusammensetzung, aufweist.

5. Mischzusammensetzung gemäß einem der Ansprüche 1 bis 4, wobei das Kohlenwasserstoff-basierte Kühlmittel ein Kohlenwasserstoff mit 1 oder mehr und 8 oder weniger Kohlenstoffatomen ist.

6. Verfahren zur Herstellung einer Mischzusammensetzung für eine Kältemaschine, umfassend eine Kältemaschinenölzusammensetzung und ein Kühlmittel, das ein Kohlenwasserstoff-basiertes Kühlmittel enthält,
umfassend ein Verfahren zur Herstellung einer Kältemaschinenölzusammensetzung, umfassend einen Schritt zum Mischen einer oder mehrerer Arten, ausgewählt aus einer durch die folgende allgemeine Formel (1) dargestellten Polyalkylenglykol-basierten Verbindung (A) mit einem zahlenmittleren Molekulargewicht von 1.100 oder mehr, bestimmt durch Gelpermeationschromatographie (GPC) wie in der Beschreibung offenbart, umfasst: 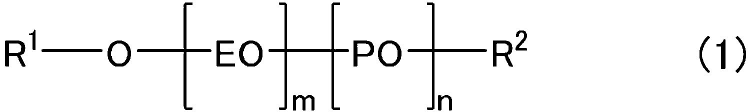
wobei in der allgemeinen Formel (1) eines von R¹ und R² ein Wasserstoffatom darstellt und das andere eine lineare oder verzweigte Alkylgruppe mit 1 oder mehr und 16 oder weniger Kohlenstoffatomen darstellt, E eine Ethylengruppe darstellt, P eine Propylengruppe darstellt und m und n jeweils eine Zahl von 0 oder größer darstellen, vorausgesetzt, dass m+n 1 oder mehr und 50 oder weniger beträgt, und
wobei die Polyalkylenglykol-basierte Verbindung (A) einen Hydroxylwert von 10 mgKOH/g oder mehr, bestimmt gemäß JIS K0070:1992, aufweist.

## Revendications

1. Composition mixte pour réfrigérateur comprenant une composition d'huile pour réfrigérateur et un fluide frigorigène contenant un fluide frigorigène à base d'hydrocarbure,
la composition d'huile pour réfrigérateur comprenant un ou plusieurs composés choisis parmi un composé à base de polyalkylène glycol (A) ayant un poids moléculaire moyen en nombre de 1 100 ou plus, tel que déterminé par chromatographie par perméation de gel (GPC) décrite dans la description, représenté par la formule générale (1) suivante : 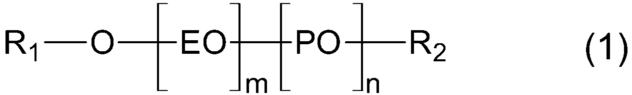
dans laquelle, dans la formule générale (1), l'un des R1 et R2 représente un atome d'hydrogène, et l'autre représente un groupe alkyle linéaire ou ramifié ayant 1 ou plus et 16 ou moins d'atomes de carbone, E représente un groupe éthylène, P représente un groupe propylène, et m et n représentent chacun un nombre égal à 0 ou plus, à condition que m+n soit égal à 1 ou plus et à 50 ou moins, et
dans laquelle le composé à base de polyalkylène glycol (A) a un indice d'hydroxyle de 10 mgKOH/g ou plus, tel que déterminé conformément à la norme JIS K0070:1992.

2. La composition mixte selon la revendication 1, dans laquelle, dans la formule générale (1), n est égal à 1 ou plus.

3. La composition mixte selon la revendication 1 ou 2, dans laquelle, dans la formule générale (1), m/n est inférieur ou égal à 1.

4. La composition mixte selon l'une quelconque des revendications 1 à 3, dans laquelle la composition d'huile de réfrigération a une teneur en composé à base de polyalkylène glycol (A) de 80 % en masse ou plus par rapport à la quantité totale de la composition d'huile de réfrigération.

5. La composition mixte selon l'une quelconque des revendications 1 à 4, dans laquelle le réfrigérant à base d'hydrocarbure est un hydrocarbure comportant 1 atome de carbone ou plus et 8 atomes de carbone ou moins.

6. Procédé de fabrication d'une composition mixte pour un réfrigérateur comprenant une composition d'huile pour réfrigérateur et un réfrigérant contenant un réfrigérant à base d'hydrocarbure,
comprenant un procédé de fabrication d'une composition d'huile pour réfrigérateur, comprenant une étape consistant à mélanger un ou plusieurs types choisis parmi un composé à base de polyalkylène glycol (A) ayant un poids moléculaire moyen en nombre de 1 100 ou plus, tel que déterminé par chromatographie par perméation de gel (GPC) décrite dans la description, représenté par la formule générale (1) suivante : 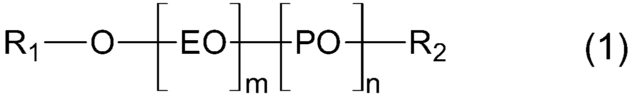
dans laquelle, dans la formule générale (1), l'un des R1 et R2 représente un atome d'hydrogène, et l'autre représente un groupe alkyle linéaire ou ramifié ayant 1 ou plus et 16 ou moins d'atomes de carbone, E représente un groupe éthylène, P représente un groupe propylène, et m et n représentent chacun un nombre égal à 0 ou plus, à condition que m+n soit égal à 1 ou plus et à 50 ou moins, et
dans lequel le composé à base de polyalkylène glycol (A) a un indice d'hydroxyle de 10 mgKOH/g ou plus, tel que déterminé conformément à la norme JIS K0070:1992.
